Europäisches Patentamt

European Patent Office

Office européen des brevets

(19)

(11) EP 0 826 987 B1

(12) EUROPÄISCHE PATENTSCHRIFT

(45) Veröffentlichungstag und Bekanntmachung des Hinweises auf die Patenterteilung:
**08.08.2001 Patentblatt 2001/32**

(51) Int Cl.⁷: **G02B 5/20**, G08B 13/193

(21) Anmeldenummer: **96113898.9**

(22) Anmeldetag: **30.08.1996**

(54) **Infraroteindringdetektor mit Filterscheibe**

Infrared intrusion detector with filter disc

Détecteur d'intrusion à disque filtrant

(84) Benannte Vertragsstaaten:
**CH DE FR GB LI**

(43) Veröffentlichungstag der Anmeldung:
**04.03.1998 Patentblatt 1998/10**

(73) Patentinhaber: **Siemens Building Technologies AG**
**8034 Zürich (CH)**

(72) Erfinder:
• **Müller, Kurt Albert, Dr.**
 **8712 Stäfa (CH)**
• **Allemann, Martin, Dr.**
 **8623 Wetzikon (CH)**

• **Gale, Michael Thomas, Dr.**
 **8907 Wettswil (CH)**
• **Heine, Claus**
 **8003 Zürich (CH)**

(74) Vertreter: **Dittrich, Horst, Dr. et al**
**Siemens Building Technologies AG,**
**Cerberus Division**
**8708 Männedorf (CH)**

(56) Entgegenhaltungen:
EP-A- 0 635 810     EP-A- 0 650 039
EP-A- 0 707 294     US-A- 4 939 359
US-A- 5 530 565

**Beschreibung**

Die Erfindung betrifft einen Infraroteindringdetektor mit einer Filterscheibe zur Filterung von störender Strahlung ausserhalb des Wärmestrahlungsbereichs.

Infraroteindringdetektoren sind allgemein bekannt. Sie dienen zur Erkennung von Personen, die sich unbefugt in überwachten Räumen aufhalten, indem ihre Wärmestrahlung detektiert wird. Erreicht das detektierte Signal eine bestimmte Grösse oder Form wird ein Alarm abgegeben. Die Infraroteindringdetektoren enthalten im allgemeinen in ihrem Gehäuse zwei identische nebeneinander liegende Infrarotsensoren, zumeist pyroelektrische Sensoren, auf die über eine Optik Strahlung aus dem überwachten Raum fällt. Die von den pyroelektrischen Sensoren ausgehenden Signale werden verstärkt, und auf Grund einer Auswertung ihrer Differenz wird eine Meldung abgegeben. Die erwähnte Optik des Detektors ist so konstruiert, dass Strahlung aus mehreren Raumwinkelbereichen sowohl im Azimut, parallel zum Boden des Raumes, als auch in der Elevation, senkrecht zum Boden des Raumes, auf die Sensoren fokussiert wird. Bei den einen der heute verkauften Detektoren besteht diese Optik aus einer Matrix von Fresnellinsen, wovon jede Linse Strahlung aus einem gegebenen Raumwinkelbereich auf die Sensoren fokussiert. Bei anderen Detektoren tritt die Strahlung aus dem Raum durch ein Eintrittsfenster in das Meldergehäuse hinein und wird dort durch eine Spiegeloptik auf die Sensoren gelenkt. Die Spiegeloptik besteht aus mehreren Facetten, von denen jede Facette Strahlung aus einem gegebenen Raumwinkelbereich auf die Sensoren lenkt. Bei beiden Typen von Detektoren ist es wichtig, dass möglichst viel Wärmestrahlung aus dem Wellenlängenbereich zwischen 4 $\mu$m und 15 $\mu$m auf die Sensoren gelangt und Strahlung aus dem Wellenlängenbereich von 0.3 bis 4 $\mu$m wie zum Beispiel Licht von hellen Lampen oder Sonnenlicht so gut wie möglich ausgeblendet wird. Zu starke Strahlung aus diesem Bereich ausserhalb des Wärmestrahlungsbereichs verursacht sonst Signale, welche die Anwesenheit einer Person vortäuschen und einen Fehlalarm auslösen können.

Bei den heute verkauften Infraroteindringdetektoren erfolgt die Filterung solcher störender Strahlung in erster Linie durch die geeignete Wahl des Materials für die Fresnellinsen oder das Eintrittsfenster. Das hierfür am häufigsten verwendete Polyethylen absorbiert Strahlung zwischen 0.3 und 4 $\mu$m zu 50 bis 100% und ist für den grössten Teil der für die Detektion massgebenden Wärmestrahlung zu 75% durchlässig. Diese Absorption ist jedoch für die Unterdrückung von Fehlalarmen nicht ausreichend. Eine weitere Filterung gelingt durch die Zugabe von Zinkoxid zum Polyethylen, das einerseits als weisses Pigment eine ästhetisch wünschenswerte Farbe abgibt und andererseits durch Lichtstreuung als optisches Filter dient.

Die Grösse der Zinkoxidpartikel im Vergleich zur Wellenlänge der störenden Strahlung bewirkt eine diffuse Streuung dieser Strahlung. Ein Teil der diffus gestreuten Strahlung gelangt zwar in das Innere des Detektors und auf die Sensoren. Diese ist jedoch räumlich so gleichmässig verteilt, dass die Lichtintensität auf den beiden Sensoren gleich gross ist und die Differenz zwischen den beiden Sensorsignalen gleich Null ist und kein Alarm ausgelöst wird.

In EP 0 635 810 ist eine Infrarotfilterscheibe für Infraroteindringdetektoren beschrieben, die aus Polyethylen besteht und zusätzlich Diamantpartikel von einer Grösse zwischen 0.75 und 1.25 $\mu$m als Lichtstreuer enthält. Die Diamantpartikel bewirken im Vergleich zu den Filterscheiben mit Zinkoxid eine verbesserte Streuung der störenden Strahlung. Sie haben jedoch den Nachteil, dass sie relativ teuer sind und ihre Beimischung zum Polyethylen mit Schwierigkeiten verbunden ist, indem die Verteilung der Diamantpartikel im Trägermaterial nicht immer gleichmässig ausfällt und eine sorgfältige Qualitätskontrolle der Filterscheibe notwendig ist.

Der Erfindung ist die Aufgabe gestellt, eine kostengünstige und zuverlässig herstellbare Filterscheibe für Infraroteindringdetektoren zu schaffen, die Wärmestrahlung aus verschiedenen Raumwinkelbereichen und im Wellenlängenbereich von 4 bis 15 $\mu$m möglichst gut durchlässt und störende Strahlung im Bereich von 0.3 bis 4 $\mu$m durch Absorption und Ablenkung daran hindert, direkt auf die Sensoren zu gelangen und einen Fehlalarm auszulösen.

Die Aufgabe wird durch einen Infraroteindringdetektor mit einem Gehäuse, einer Fokussieroptik, Infrarotsensoren und einer Filterscheibe gelöst, wobei die Filterscheibe auf einer ihrer Oberflächen eine beugungsoptische Mikrostruktur aufweist, die störende Strahlen mit Wellenlängen zwischen 0.3 und 4 $\mu$m und mit verschiedenen Einfallswinkeln so beugt, dass diese nach der Beugung möglichst ausserhalb des Gesichtsfelds der Infrarotsensoren fallen und nicht mehr direkt auf diese gelangen, sondern an den Wänden des Detektorinneren diffus gestreut werden, wobei Wärmestrahlung beim Durchlaufen der Filterscheibe ihren Strahlengang beibehält und durch die Fokussieroptik auf die Infrarotsensoren des Infraroteindringdetektors gelenkt wird.

Die beugungsoptische Mikrostruktur bewirkt, dass Strahlen im störenden Wellenlängenbereich und mit zu berücksichtigenden Einfallswinkeln um mindestens einen vorgegebenen Winkel gebeugt werden, sodass die Intensität, die direkt auf die Infrarotsensoren fällt, reduziert wird und möglichst viel ihrer Intensität auf die Innenwände des Detektors fällt, an denen sie diffus gestreut wird. Ein kleiner Anteil dieser diffus gestreuten Strahlung fällt darauf dennoch auf die Infrarotsensoren, löst jedoch keinen Fehlalarm aus, da durch die diffuse Streuung die Intensität auf beiden Sensoren gleich gross ist.

Ein Infraroteindringdetektor gemäß dem Oberbegriff des Anspruchs 1 ist aus EP-A-707 294 bekannt.

Aus EP-A-650 039 ist ein Infrarotdetektor mit einem eine beugungsoptische Struktur aufweisenden Eintrittsfenster (Filterscheibe) bekannt. Das Eintrittsfenster dient dazu, die zu detektierende Wärmestrahlung auf einen Sensor zu lenken.

Infrarotdetektoren empfangen Wärmestrahlung hauptsächlich aus Winkelbereichen in zwei Ebenen, aus Azimutwinkelbereichen und/oder Elevationswinkelbereichen. Für die Beugung von Strahlen aus einer dieser Ebenen, besteht die erfindungsgemässe Mikrostruktur aus einem linearen Gitter. Die Gitterlinien dieser Mikrostruktur stehen jeweils vertikal zu der Ebene, aus welcher der Infrarotdetektor Strahlung empfängt. Für die Beugung von störenden Strahlen aus verschiedenen Azimutwinkelbereichen des Raumes sind die Gitterlinien vertikal ausgerichtet. Eine horizontale Ausrichtung der Gitterlinien bewirkt andererseits, dass störende Strahlung aus den Elevationswinkelbereichen des Raumes abgelenkt werden.

Die Periode des linearen Gitters ist jeweils so gewählt, dass Strahlen im störenden Strahlungsbereichs in der ersten oder auch in mehreren höheren Ordnungen gebeugt werden, hingegen Wärmestrahlen von der Mikrostruktur nicht beeinflusst werden. Die Beugung ist durch die bekannte Gittergleichung beschrieben.

$$n_i \cdot \sin\theta_i - n_m \cdot \sin\theta_m = \frac{m \cdot \lambda}{\Lambda}$$

wobei m die Beugungsordnungszahl, $\theta_i$ der Einfallswinkel eines auf das Gitter fallenden Strahls und $\theta_m$ der Ausfallswinkel der resultierenden m-ten Beugungsordnung, $n_i$ der Brechungsindex des Mediums des einfallenden Strahls und $n_m$ der Brechungsindex des Mediums des gebeugten Strahls, $\lambda$ die Wellenlänge des Strahls und $\Lambda$ die Gitterperiode bedeuten. Die Gitterperiode bestimmt also zusammen mit den Brechungsindizes $n_m$ und $n_i$ den wirksamen Wellenlängenbereich des Gitters und die resultierenden Beugungswinkel. Die weiteren Dimensionen des Gitters, die Tiefe sowie die Form des Profils, sind für die Beugungseffizienz, also den Anteil der einfallenden Intensität, die jeweils in jeder Beugungsordnung enthalten ist, bestimmend.

Da ein breiter Bereich von Wellenlängen sowie Einfallswinkeln zu berücksichtigen ist, sind verschiedene Werte für die Gitterdimensionen möglich. Für den Fall von normaler Einfallsstrahlung muss das Produkt aus der Gitterperiode $\Lambda$ und dem Brechungsindex $n_m$ gleich oder grösser als die Wellenlängen der zu beugenden störenden Strahlung sein; ansonsten ergibt die Gleichung keine propagierenden Beugungsordnungen, die in das Detektorinnere gelangen. Sie muss also mindestens 4 µm betragen. Ist sie länger als 4 µm, wird auch eine Beugung der Wärmestrahlung bewirkt, was unerwünscht ist. Eine Gitterperiode von 4 µm bewirkt eine Beugung der störenden Strahlung bei 4 µm Wellenlänge um 90°, kürzere Wellenlängen werden um einen kleineren Winkel gebeugt. Für den Fall von Einfallswinkeln grösser oder kleiner 0° und einer Gitterperiode von 4 µm werden störende Strahlen in erwünschter Weise gebeugt. Die Beugungswinkel nehmen wiederum mit der Wellenlänge ab, sodass es vorkommt, dass für Strahlung mit kürzeren Wellenlängen die Beugung nicht ausreicht und diese direkt auf die Infrarotsensoren fällt. Wärmestrahlen mit Einfallswinkeln grösser oder kleiner 0° werden zum Teil auch gebeugt, was wiederum unerwünscht ist.

Wird eine Gitterperiode kleiner als 4 µm gewählt, verschiebt sich der Bereich der Wellenlängen, die in erwünschter und genügender Weise gebeugt werden, zu den kürzeren Wellenlängen hin während Wellenlängen grösser als die Gitterperiode nicht oder nur in der einen Ordnung (plus- oder minus-ersten Ordnung) gebeugt werden.

Die Wirkung des Gitters auf die Störstrahlung summiert sich aus der Beugung der Strahlen bei verschiedenen Wellenlängen und Einfallswinkeln. Die resultierende Transmissionsfunktion des Gitters erreicht also keine Step-Funktion, sondern sinkt in einem Teilbereich der störenden Strahlung auf nahezu 0 % und steigt bei den kürzeren sowie längeren Wellenlängen und im Bereich der Wärmestrahlung allmählich gegen 100 %.

Die Gitterperiode der Mikrostruktur auf der erfindungsgemässen Filterscheibe ist demnach maximal gleich der grössten Wellenlänge der störenden Strahlung oder der Wellenlänge, welche die störende Strahlung von der zu detektierenden Wärmestrahlung trennt, in diesem Fall 4 µm. Vorzugsweise liegt sie bei einem Wert etwas unter dieser Wellenlänge, sodass so viel wie möglich der Wärmestrahlung unbeeinflusst durch die Filterscheibe tritt, d. h. die spektrale Transmissionskurve aufgrund des Gitters schon im unteren Wellenlängenbereich der Wärmestrahlung auf 100 % zugeht. Schliesslich wird auch die Transmission des gewählten Filtermaterials bei der Wahl der Gitterperiode berücksichtigt. Besitzt das Filtermaterial beispielsweise eine hohe Transmission in der Mitte des Störstrahlungsbereichs, wird die Gitterperiode so gewählt, dass der Tiefpunkt der Transmissionskurve des Gitters in die Mitte des Strahlungsbereichs fällt.

Es ist also klar, dass je nach Bereich der Einfallswinkel, Bereich der Wellenlängen der meist störenden Strahlung und der gewünschten Reduktion der störenden Lichtintensität für das Gitter verschiedene Gitterperioden, die kleiner als die grösste Wellenlänge der Störstrahlung ist, in Frage kommen. Die Beugungseffizienz wird durch die Form und Tiefe der einzelnen Gitterlinien bestimmt. Sie kann unter Anwendung der Maxwell-Gleichungen berechnet werden. Insbesondere kann die Beugungseffizienz in der ersten Ordnung durch Optimierung des Gitterprofils maximiert werden.

Eine spezielle Ausführungsform der Filterscheibe besteht aus Polyethylen. Das Polyethylen ist für störende Strahlung insbesondere zwischen 1.2 und 2.2 µm Wellenlänge durchlässig. Die Filterscheibe weist ein lineares Gitter auf, dessen Periode bei 2.8 µm liegt. Diese bewirkt, dass die intensive Störstrahlung zwischen 1.2 und 2.2 µm am meisten und Störstrahlung zwischen 2.8 und 4 µm sowie unter 1.3 µm in kleinerem Mass gebeugt wird. Das Gitter hat ausserdem eine Tiefe von 1.9 µm und ein rechteckiges Profil mit einer Stegbreite, welche die Hälfte der Gitterperiode beträgt. Dieses Profil ist in Bezug auf die Herstellung auch günstiger.

Eine Ausführung einer Filterscheibe für einen Infraroteindringdetektor mit Spiegeloptik mit der Filterscheibe als Eintrittsfenster ausgebildet ist anhand der folgenden drei Figuren erläutert.

Figur 1 zeigt in einem vertikalen Querschnitt einen Infraroteindringdetektor des Typs mit Spiegeloptik und der erfindungsgemässen Filterscheibe.
Figur 2 zeigt einen horizontalen Querschnitt durch den Infraroteindringdetektor der Figur 1 mit dem Gang der Wärmestrahlung sowie der störenden Strahlung.
Figur 3 zeigt eine vergrösserte Profilansicht der Mikrostruktur auf der Filterscheibe.

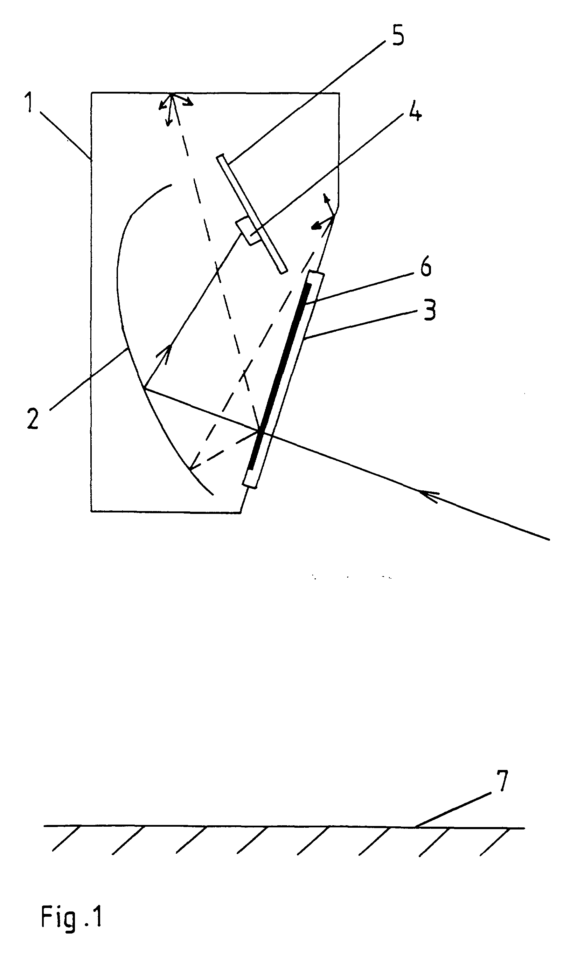

Figur 1 zeigt einen Infraroteindringdetektor mit einem Eintrittsfenster und einer Spiegeloptik. Der Detektor besitzt ein Gehäuse 1, eine Spiegeloptik 2, eine Filterscheibe 3 als Eintrittsfenster ausgebildet und Infrarotsensoren 4 auf einer Leiterplatte 5 mit Auswerteelektronik. Die Filterscheibe 3 enthält auf ihrer inneren Oberfläche eine beugungsoptische Mikrostruktur 6. Die Mikrostruktur 6 ist vorzugsweise als geradliniges Gitter ausgebildet. In diesem Beispiel tritt ein von einem warmen Körper ausgehender Strahl, durch die Filterscheibe 3 und nach Reflexion an der Spiegeloptik 2 auf die Infrarotsensoren 4. Sein Strahlengang ist mit ausgezogener Linie angedeutet und wird von der Mikrostruktur 6 nicht beeinflusst. Ein Strahl mit einer Wellenlänge ausserhalb des Wärmestrahlungsbereichs andererseits wird an der Mikrostruktur 6 in die plus-erste und minus-erste Beugungsordnung gebeugt. Sein Strahlengang ist mit gebrochener Linie angedeutet. Dabei gelangt ein Teil der störenden Strahlung in die Beugungsordnung und wird an den Innenwänden des Gehäuses 1 diffus gestreut während der restliche Teil in der nullten Beugungsordnung verbleibt und zusammen mit der Wärmestrahlung auf die Infrarotsensoren gelangt. Die Beugung bewirkt jedoch eine genügende Reduktion der Intensität der störenden Strahlung auf den Infrarotsensoren 4. Die Gitterlinien sind entweder vertikal ausgerichtet, d.h. sie liegen nahezu senkrecht zum Boden 7 des Raumes (parallel zur Neigung der Filterscheibe) und parallel zur Ebene dieser Zeichnung, oder sie sind horizontal ausgerichtet, d.h. sie liegen horizontal zum Boden 7 des Raumes und senkrecht zur Ebene der Zeichnung. Vertikale Gitterlinien beugen störende Strahlen aus Azimutwinkelbereichen in die Ebene senkrecht zu dieser Zeichnung. Horizontale Gitterlinien beugen störende Strahlen aus Elevationswinkelbereichen. Ihr Strahlengang verläuft beispielsweise entlang den gebrochenen Linien. Nach der Beugung gelangen die störenden Strahlen entweder direkt oder nach Reflexion an der Spiegeloptik 2 auf die Innenwände des Gehäuses 1, wo sie diffus gestreut werden.

Eines der am besten geeigneten Materialien für eine Filterscheibe dieser Art ist das Polyethylen, da es störende Strahlung bereits zum Teil absorbiert und für Wärmestrahlung gut durchlässig ist. Ausserdem eignet sich Polyethylen gut zur Herstellung von Mikrostrukturen dieser Art, da es sich in erwärmten Zustand gut prägen lässt.

Vorzugsweise ist die Mikrostruktur 6 auf der Innenseite der Filterscheibe 3, da sie dort vor Schmutz und Feuchtigkeit geschützt ist. In geschützten Umgebungen ist eine Mikrostruktur zusätzlich auch auf der äusseren Oberfläche der Filterscheibe möglich. Eine Mikrostruktur auf beiden Oberflächen der Filterscheibe bewirkt eine zweifache Beugung der störenden Strahlung, womit die Filterwirkung erhöht wird.

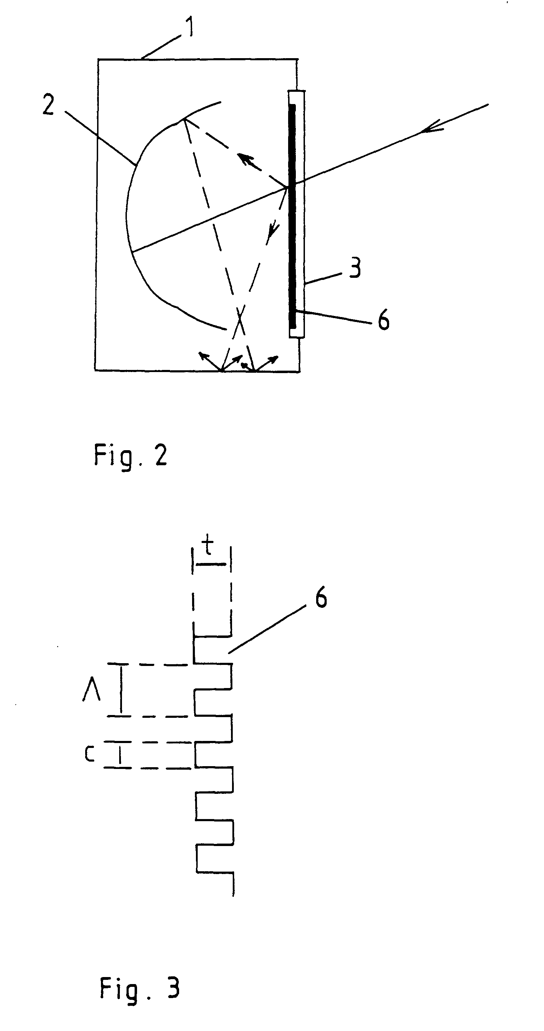

Figur 2 zeigt einen horizontalen Querschnitt des Infraroteindringdetektors von Figur 1. Die Gitterlinien der Mikrostruktur 6 sind in der Filterscheibe 3 nahezu vertikal zum Boden des Raumes und senkrecht zur Ebene dieser Zeichnung ausgerichtet. Es ist ein Beispiel eines Strahlengangs von Wärmestrahlung und einem störenden Strahl aus einem Azimutwinkelbereich illustriert. Die ausgezogenen Linien bezeichnen den Gang der Wärmestrahlung, die gebrochenen Linien den der störenden Strahlung. Die störende Strahlung wird am Gitter in zwei Beugungsordnungen gelenkt, wovon die eine am Spiegel 2 reflektiert und auf eine Innenwand des Gehäuses 1 trifft, wo er diffus gestreut wird. Die andere Beugungsordnung trifft direkt auf die Innenwand des Gehäuses 1 und wird diffus ebenfalls gestreut. Ein Teil der störenden Strahlung verfolgt wiederum in der nullten Beugungsordnung den Strahlengang der Wärmestrahlung.

Figur 3 zeigt das Profil einer Mikrostruktur 6 auf der einen Seite der Filterscheibe 3 am Beispiel eines Gitters. In diesem Beispiel beträgt die Periode $\Lambda$ des Gitters 2.8 µm und die Tiefe t 1.9 µm. Das Profil des Gitters ist rechteckig mit einem Verhältnis der Stegbreite c zur Periode $\Lambda$ von 1:2.

Das in Figur 3 gezeigte Gitter bewirkt eine Reduktion des störenden Lichts im Bereich von 1.2 bis 2.2 µm Wellenlänge um 50% im Vergleich zu einem Eintrittsfenster mit Polyethylen ohne Mikrostruktur. Dabei bleibt im selben Vergleich die Transmission für Wärmestrahlung auf dem gleichen Niveau oder ist sogar leicht erhöht. Die Erhöhung der Transmission liegt einer Reduktion der Fresnelreflexion an der Oberfläche mit der Mikrostruktur zugrunde. Durch die Mikrostruktur wird ein effektiver Brechungsindex des Polyethylens erreicht, der tiefer liegt als der Brechungsindex des Materials ohne Oberflächenstruktur. Der tiefere Brechungsindex bewirkt vor allem bei den grösseren Einfallswinkeln eine reduzierte Fresnelreflexion.

Für die Herstellung einer Mikrostruktur auf einer Filterscheibe dieser Art wird zunächst durch ein photolithographisches Verfahren eine Mikrostruktur aus Photoresist gefertigt. Hierzu eignet sich ein Laserschreibverfahren am besten, da durch dieses Verfahren ein grosser Bereich von Dimensionen und verschiedene Geometrien der Gitterlinien möglich sind. Das Laserschreibverfahren eignet sich auch insbesondere für die Herstellung von rechteckigen Profilen. Von der Photoresist-Mikrostruktur wird sodann durch ein Elektroforming-Verfahren ein Nickelstempel gefertigt, der ein Negativ der Mikrostruktur enthält. Dieser wird sodann zur Prägung des erhitzten Polyethylens verwendet.

Die Erfindung wurde hier für Infraroteindringdetektoren mit Spiegeloptiken und einem Eintrittsfenster beschrieben. Die Anwendung dieser Art Filterscheibe eignet sich auch für Infraroteindringdetektoren mit Fresnellinsenoptik. Eine Filterscheibe dieser Art wird hier beispielsweise in flacher Ausführung oder in Form einer gekrümmten Scheibe im Detektorinnern parallel zur Fresnellinsenmatrix angeordnet. Die Strahlung aus dem Raum tritt also zunächst durch die Fresnellinsenoptik und danach durch die Filterscheibe, wo sie teils gebeugt wird teils direkt auf die Infrarotsensoren fällt. Die Gitterperiode und das Profil des Gitters auf der Filterscheibe ist hier entsprechend der Einfallswinkel der Strahlung auf die Filterscheibe nach der Fokussierung durch die Linsenoptik angepasst.

## Patentansprüche

1. Infraroteindringdetektor mit einem Gehäuse (1), mindestens zwei Infrarotsensoren (4) einer Optik (2) für die Fokussierung von Wärmestrahlung aus einem zu überwachenden Raum auf die Infrarotsensoren (4) und mit einer Filterscheibe (3) für die Unterdrückung von Fehlalarmen durch Filterung von störender Strahlung ausserhalb des Wärmestrahlungsbereichs, dadurch gekennzeichnet, dass die Filterscheibe (3) auf einer ihrer Oberflächen mindestens eine beugungsoptische Mikrostruktur (6) aufweist, welche die störende Strahlung ausserhalb des Wärmestrahlungsbereichs so beugt, dass diese ausserhalb des Gesichtsfelds der Infrarotsensoren (4) und auf die Innenwände des Gehäuses (1) des Infraroteindringdetektors fällt und an diesen diffus gestreut wird, während die zu detektierende Wärmestrahlung beim Durchlaufen der Filterscheibe (3) ihren Strahlengang beibehält und durch die Optik (2) direkt auf die Infrarotsensoren (4) gelenkt wird.

2. Infraroteindringdetektor nach Patentanspruch 1, dadurch gekennzeichnet, dass die Optik zur Fokussierung der zu detektierenden Wärmestrahlung auf die Infrarotsensoren (4) mindestens einen Spiegel (2) aufweist, die Filterscheibe (3) als Eintrittsfenster für die Wärmestrahlung in das Innere des Gehäuses (1) ausgebildet ist und die Mikrostruktur (6) an der dem Inneren des Infraroteindringdetektors zugewandten Oberfläche angeordnet ist.

3. Infraroteindringdetektor nach Patentanspruch 1, dadurch gekennzeichnet, dass die Optik zur Fokussierung von Wärmestrahlung auf die Infrarotsensoren eine Fresnellinsenmatrix aufweist und die Filterscheibe (3) innerhalb der Fresnellinsenmatrix angeordnet ist.

4. Infraroteindringdetektor nach den Patentansprüchen 2 oder 3, dadurch gekennzeichnet, dass die beugungsoptische Mikrostruktur (6) aus einem linearen Gitter besteht mit einer Periode $\Lambda$, die kleiner als die Wellenlänge ist, die den Wellenlängenbereich der zu detektierenden Wärmestrahlung von dem der störenden Strahlung trennt.

5. Infraroteindringdetektor nach Patentanspruch 4, dadurch gekennzeichnet, dass die Filterscheibe (3) aus Polyethylen besteht.

6. Infraroteindringdetektor nach Patentanspruch 5, dadurch gekennzeichnet, dass das lineare Gitter der Mikrostruktur (6) eine Periode $\Lambda$ von 2.8 μm aufweist.

7. Infraroteindringdetektor nach Patentanspruch 6, dadurch gekennzeichnet, dass das lineare Gitter der Mikrostruktur (6) ein rechteckiges Profil mit einem Verhältnis der Stegbreite c zur Periode $\Lambda$ des Gitters von 1:2 und eine Gittertiefe t von 1.9 μm aufweist.

8. Infraroteindringdetektor nach Patentanspruch 4 oder 5, dadurch gekennzeichnet, dass die Filterscheibe (3) eine Mikrostruktur (6) auf beiden ihrer Oberflächen aufweist.

## Claims

1. Infrared intrusion detector having a housing (1), at least two infrared sensors (4) of an optical system (2) for focusing thermal radiation from a space under surveillance on the infrared sensors (4) and having a filter disc (3) for suppressing false alarms by filtering interfering radiation outside the thermal radiation range, characterized in that the filter disc (3) has, on one of its surfaces, at least one optical-diffraction microstructure (6) that diffracts the interfering radiation outside the thermal radiation range in such a way that it falls outside the field coverage of the infrared sensors (4) and onto the internal walls of the housing (1) of the infrared intrusion detector and is diffusely scattered at it, whereas the thermal radiation to be detected maintains its beam path on passing through the filter disc (3) and is guided directly onto the infrared sensors (4) by the optical system (2).

2. Infrared intrusion detector according to Patent Claim 1, characterized in that the optical system for focusing the thermal radiation to be detected on the infrared sensors (4) has at least one mirror (2), the filter disc (3) is designed as the entrance window for the thermal radiation into the interior of the housing (1) and the microstructure (6) is disposed at that surface facing the interior of the infrared intrusion detector.

3. Infrared intrusion detector according to Patent Claim 1, characterized in that the optical system for focusing thermal radiation on the infrared sensors has a fresnel-lens matrix and the filter disc (3) is disposed inside the fresnel-lens matrix.

4. Infrared intrusion detector according to Patent Claim 2 or 3, characterized in that the optical-diffraction microstructure (6) comprises a linear grating having a period $\Lambda$ that is smaller than the wavelength that separates the wavelength range of the thermal radiation to be detected from that of the interfering radiation.

5. Infrared intrusion detector according to Patent Claim 4, characterized in that the filter disc (3) is composed of polyethylene.

6. Infrared intrusion detector according to Patent Claim 5, characterized in that the linear grating of the microstructure (6) has a period $\Lambda$ of 2.8 $\mu$m.

7. Infrared intrusion detector according to Patent Claim 6, characterized in that the linear grating of the microstructure (6) has a rectangular profile having a ratio of the ridge width c to the period $\Lambda$ of the grating of 1:2 and a grating depth t of 1.9 $\mu$m.

8. Infrared intrusion detector according to Patent Claim 4 or 5, characterized in that the filter disc (3) has a microstructure (6) on both its surfaces.

## Revendications

1. Détecteur d'intrusion à infrarouge comportant un boîtier (1), au moins deux capteurs (4) à infrarouge, une optique (2) pour la concentration de rayonnement thermique provenant d'une zone à surveiller sur les capteurs (4) à infrarouge et comportant un disque (3) filtrant pour supprimer des fausses alertes par filtrage de rayonnement parasite à l'extérieur de l'intervalle de rayonnement thermique, caractérisé en ce que le disque (3) filtrant comporte sur l'une de ses surfaces au moins une microstructure (6) de diffraction optique, qui diffracte le rayonnement parasite à l'extérieur de l'intervalle de rayonnement thermique de telle manière que ce rayonnement parasite arrive à l'extérieur du champ de vue des capteurs (4) à infrarouge et sur les parois intérieures du boîtier (1) du détecteur d'intrusion à infrarouge et y est dispersé de manière diffuse, tandis que le rayonnement thermique à détecter conserve sa marche des rayons lorsqu'il passe à travers le disque (3) filtrant et est dévié par l'optique (2) directement sur les capteurs (4) à infrarouge.

2. Détecteur d'intrusion à infrarouge suivant la revendication 1, caractérisé en ce que l'optique comporte pour la concentration du rayonnement thermique à détecter sur les capteurs (4) à infrarouge au moins un miroir (2), en ce que le disque (3) filtrant est réalisé en fenêtre d'entrée à l'intérieur du boîtier (1) pour le rayonnement thermique et en ce que la microstructure (6) est disposée sur la surface tournée vers l'intérieur du détecteur d'intrusion à infrarouge.

3. Détecteur d'intrusion à infrarouge suivant la revendication 1, caractérisé en ce que l'optique pour concentrer du rayonnement thermique sur les capteurs à infrarouge comporte une matrice de lentilles de Fresnel et en ce que le disque 3 filtrant est monté à l'intérieur de la matrice de lentilles de Fresnel.

4. Détecteur d'intrusion à infrarouge suivant les revendications 2 ou 3, caractérisé en ce que la microstructure (6) de diffraction optique est constituée d'un réseau linéaire ayant une période $\Lambda$ qui est inférieure à la longueur d'onde qui sépare l'intervalle de longueur d'onde du rayonnement thermique à détecter de celui du rayonnement parasite.

5. Détecteur d'intrusion à infrarouge suivant la revendication 4, caractérisé en ce que le disque (3) filtrant est en polyéthylène.

6. Détecteur d'intrusion à infrarouge suivant la revendication 5, caractérisé en ce que le réseau linéaire de la microstructure (6) a une période $\Lambda$ de 2,8 $\mu$m.

7. Détecteur d'intrusion à infrarouge suivant la revendication 6, caractérisé en ce que le réseau linéaire de la microstructure (6) a un profil rectangulaire ayant un rapport de la largeur c d'arête à la période $\Lambda$ du réseau de 1:2 et une profondeur t de réseau de 1,9 $\mu$m.

8. Détecteur d'intrusion à infrarouge suivant la revendication 4 ou 5, caractérisé en ce que le disque (3) filtrant comporte une microstructure (6) sur ses deux faces.

Fig.1

8

Fig. 2

Fig. 3